# EUROPEAN PATENT SPECIFICATION

(11) **EP 2 973 807 B1**
(45) Date of publication and mention of the grant of the patent: **29.11.2017**
(21) Application number: 14712168.5
(22) Date of filing: 07.03.2014
(51) Int. Cl.: H01M 4/86, H01M 4/88, H01M 4/90, H01M 8/124

(54) **COMPOSITION FOR ANODE IN FUEL CELL**
ZUSAMMENSETZUNG FÜR ANODE IN EINER BRENNSTOFFZELLE
COMPOSITION POUR ANODE DE PILE À COMBUSTIBLE

(30) Priority: 15.03.2013 US 201313837068
(43) Date of publication of application: 20.01.2016
(73) Proprietor: LG Fuel Cell Systems Inc., North Canton, OH 44720 (US)
(72) Inventor: GOETTLER, Richard W., Medina, OH 44256 (US); LEE, Shung-Ik, Canton, OH 44718 (US); LIU, Zhien, Canal Fulton, OH 44614 (US)
(74) Representative: HGF Limited
(86) International application number: PCT/US2014/022059
(87) International publication number: WO 2014/150060

(56) References cited:
- EP-A2- 1 441 406
- US-A1- 2011 091 794
- US-A1- 2012 321 983

## Description

This invention was made with Government support under Assistance Agreement No. DE-FE0000303 awarded by Department of Energy. The Government has certain rights in this invention.

### TECHNICAL FIELD

The disclosure generally relates to fuel cells, such as solid oxide fuel cells.

### BACKGROUND

Fuel cells, fuel cell systems and interconnects for fuel cells and fuel cell systems remain an area of interest. Some existing systems have various shortcomings, drawbacks, and disadvantages relative to certain applications. Accordingly, there remains a need for further contributions in this area of technology.

Document EP 1441 406 A2 discloses a fuel cell comprising an anode having a La(Sr)Cr(Mn)O₃ perovskite as main component and including nickel. US 2011/091794 A1 discloses a fuel electrode comprising a perovskite represented by A₁₋ₓA'ₓB_{1-y}B'_{y}O₃, wherein A can be La and A' Sr; B can Ti, and can be substituted by Ni (= B'). US 2012/321983 A1 discloses a fuel cell comprising a cathode, an electrolyte, an anode, wherein the anode can be made of La₁₋ₓSrₓMn_{y}Cr_{1-y}O₃. It refers to a Ruddlesden-Popper phase only in combination with a cathode.

### SUMMARY

Example compositions for anodes of fuels cells, such as, e.g., solid oxide fuels cells, are described. For example, a composition including a Ni metal phase constitution dispersed in a Mn-based Ruddlesden-Popper (R-P) phase constitution is used to form an anode for use in an electrochemical cell. When employed in a solid oxide fuel cell, an anode of such a composition may display relatively high durability in despite the relatively low oxygen partial pressure operating environment of the fuel side of the cell, e.g., due to the inherent thermodynamics of MnOx compounds and the size of the Mn cations. Moreover, the presence of Ni metal phase constitution dispersed within the R-P phase constitution may act as a fuel oxidizing catalyst in combination with the catalytic activity of the R-P phase constitution.

In one example, the disclosure is directed to a fuel cell comprising a cathode; an electrolyte; and an reduced anode separated from the cathode by the electrolyte, wherein the reduced anode includes a Ni metal phase constitution dispersed in a (La₁₋ₓSrₓ)ₙ₊₁MnₙO₃ₙ₊₁ compound having a Mn-based Ruddlesden-Popper (R-P) phase constitution, wherein n is equal to or greater than one, and wherein the anode, cathode, and electrolyte are configured to form an electrochemical cell.

In another example, the disclosure is directed to a method of making a fuel cell, the method comprising forming an electrolyte on adjacent an anode, wherein the electrolyte separates the anode from a cathode, wherein the anode includes a Ni metal phase constitution dispersed in a (La₁₋ₓSrₓ)ₙ₊₁MnₙO₃ₙ₊₁ compound having a Mn-based Ruddlesden-Popper (R-P) phase constitution, wherein n is equal to or greater than one , and wherein the anode, cathode, and electrolyte are configured to form an electrochemical cell.

The Ni metal phase constitution dispersed in a (La₁₋ₓSrₓ)ₙ₊₁MnₙO₃ₙ₊₁ compound are formed from the reduction of a (La₁₋ₓSrₓ)(Mn_{y}Ni_{1-y})O₃ perovskite phase present during the initial processing of the anode under high oxygen partial pressure (air) firing conditions.

The details of one or more embodiments of the disclosure are set forth in the accompanying drawings and the description below. Other features, objects, and advantages of the disclosure will be apparent from the description and drawings, and from the claims.

### BRIEF DESCRIPTION OF DRAWINGS

The description herein makes reference to the accompanying drawings wherein like reference numerals refer to like parts throughout the several views.
FIG. 1 is a schematic diagram illustrating an example fuel cell system in accordance with an embodiment of the present disclosure.
FIG. 2 is a schematic diagram illustrating an example cross section of a fuel cell system in accordance with an embodiment of the present disclosure.
FIGS. 3-5 are plots illustrating properties of experimental examples in accordance with embodiments of the present disclosure.

Referring to the drawings, some aspects of a non-limiting example of a fuel cell system in accordance with an embodiment of the present disclosure is schematically depicted. In the drawing, various features, components and interrelationships therebetween of aspects of an embodiment of the present disclosure are depicted. However, the present disclosure is not limited to the particular embodiments presented and the components, features and interrelationships therebetween as are illustrated in the drawings and described herein.

### DETAILED DESCRIPTION

As described above, examples of the present disclosure relates to example compositions for anodes of fuels cells, such as, e.g., solid oxide fuels cells. For example, a composition including a Ni metal phase constitution dispersed in a Mn-based R-P phase constitution is used to form an anode for use in an electrochemical cell. When employed in a solid oxide fuel cell, an anode of such a composition may display relatively high durability in despite the relatively low oxygen partial pressure operating environment of the fuel side of the cell, e.g., due to thermodynamic equilibrium characteristics of MnOx compounds, and the size of the Mn cations are acceptable for the formation of the R-P phase. Moreover, the presence of Ni metal constitution dispersed within the R-P phase constitution may act as a fuel oxidizing catalyst in combination with the catalytic activity of the R-P phase constitution.

A variety of compositions may be used to form the various components of a solid oxide fuel cell including anodes and cathodes. In some examples, cathodes formed of nickelate based R-P compounds may exhibit desirable electronic and catalytic properties. For example, it has been shown that nickelate based R-P compounds of the general formula Reₙ₊₁NiₙO₃ₙ₊₁ where Re is an element of La, Pr, Nd or Sm or combinations thereof may be used to form SOFC cathodes. Such compounds may have desirable mixed ionic and electronic conductivity properties that result in low cathode polarization resistances (e.g., relatively low area specific resistance, ASR). However, such nickelate-based R-P compounds may not be suitable in all cases as an anode material, e.g., as the low oxygen partial pressure of the fuel side in a fuel cell may result in phase decomposition of the anode material.

Despite the limitations surrounding the use of nickelate R-P compounds, it has been determined that Mn-based nickelate R-P compounds may be suitable to form an anode of a fuel cell despite the low oxygen partial pressure of the fuel side in a fuel cell. For example, based on the thermodynamic equilibrium of MnOx compounds and the size of the Mn cations, Mn-based R-P compounds may be favored to exist under the low oxygen partial pressure of the fuel side in a fuel cell, and such an anode material may not be susceptible to the phase decomposition occurring for anodes formed from nickelate based R-P compounds. Whereas the nickel content of a nickelate R-P will be fully reduced to metallic nickel under the SOFC fuel environment, manganese content of oxide phase will tend to be reduced to Mn²⁺ and thus available to maintain a stable oxide phase under fuel environments. Accordingly, Mn-based R-P compounds (e.g., of the formula (La₁₋ₓSrₓ)₊₁MnₙO₃ₙ₊₁), may be a suitable material for a ceramic anode, e.g., as an alternative to Ni-YSZ cermet based anodes, due to favorable mixed ionic and electronic conductivity and microstructure retention under redox cycles and overall durability of the ceramic. The order ("n" value) of the Mn-based R-P phase will most commonly be the lower ordered compounds (n=1 or 2) that require lower average valence states for the Mn, as under the low partial pressure conditions of the fuel environment, the valence state of Mn will tend towards Mn²⁺.

One challenge in realizing a phase stable Mn-based R-P compound for an active anode (functioning in low oxygen partial pressure) is that it must first be processed in an air environment during the formation of the SOFC article, thus requiring a change in the Mn valence state and therefore affecting the stoichiometry and phase stability of the original oxide compound. In one example, an intermediate oxide phase is utilized that is stable under the standard air-firing conditions of SOFC, and that upon reduction generates a correct stoichiometric Mn-based R-P compound that is phase stable under the SOFC fuel environment based on achievement of suitable Mn valence states and A-to-B site ratios as the degree of A-site doping by cations such as Sr can influence the valence state of the Mn on the B-site. The option to achieve the Mn-based R-P phase under the fuel environment of the SOFC is to start with an air-stable, Mn and Ni mixed B-site perovskites, such as, e.g., (La₁₋ₓSrₓ)(Mn₁₋ₓ,Niₓ)O₃ anode formulation during air firing. Upon reduction, these compounds change to a Ni metal phase plus (La₁₋ₓSrₓ)ₙ₊₁MnₙO₃ₙ₊₁, which is a R-P compound that is most generally favored to exist under low oxygen partial pressure where Mn valence trends toward 2+. As an additional benefit, a Ni phase is produced during reduction that contributes catalytic properties in addition to the Mn-based R-P phase.

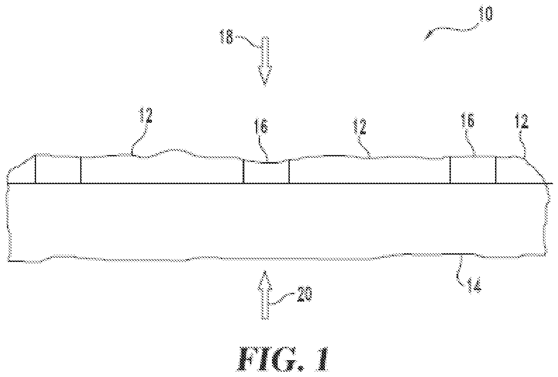

FIG. 1 is a schematic diagram illustrating an example fuel cell system 10 in accordance with an embodiment of the present disclosure. As shown in FIG. 1, fuel cell system 10 includes a plurality of electrochemical cells 12 (or "individual fuel cells") formed on substrate 14. As will be described below, one or more of the plurality of electrochemical cells 12 may include an anode formed of the example compositions described herein. Electrochemical cells 12 are coupled together in series by interconnects 16. Fuel cell system 10 is a segmented-in-series arrangement deposited on a flat porous ceramic tube, although it will be understood that the present disclosure is equally applicable to segmented-in-series arrangements on other substrates, such on a circular porous ceramic tube. In various embodiments, fuel cell system 10 may be an integrated planar fuel cell system or a tubular fuel cell system.

Each electrochemical cell 12 includes an oxidant side 18 and a fuel side 20. The oxidant is generally air, but could also be pure oxygen (O₂) or other oxidants, e.g., including dilute air for fuel cell systems having air recycle loops, and is supplied to electrochemical cells 12 from oxidant side 18. Substrate 14 may be specifically engineered porosity, e.g., the porous ceramic material is stable at fuel cell operation conditions and chemically compatible with other fuel cell materials. In other embodiments, substrate 14 may be a surface-modified material, e.g., a porous ceramic material having a coating or other surface modification, e.g., configured to prevent or reduce interaction between electrochemical cell 12 layers and substrate 14. A fuel, such as a reformed hydrocarbon fuel, e.g., synthesis gas, is supplied to electrochemical cells 12 from fuel side 20 via channels (not shown) in porous substrate 14. Although air and synthesis gas reformed from a hydrocarbon fuel may be employed in some examples, it will be understood that electrochemical cells using other oxidants and fuels may be employed without departing from the scope of the present disclosure, e.g., pure hydrogen and pure oxygen. In addition, although fuel is supplied to electrochemical cells 12 via substrate 14, it will be understood that in other embodiments, the oxidant may be supplied to the electrochemical cells via a porous substrate.

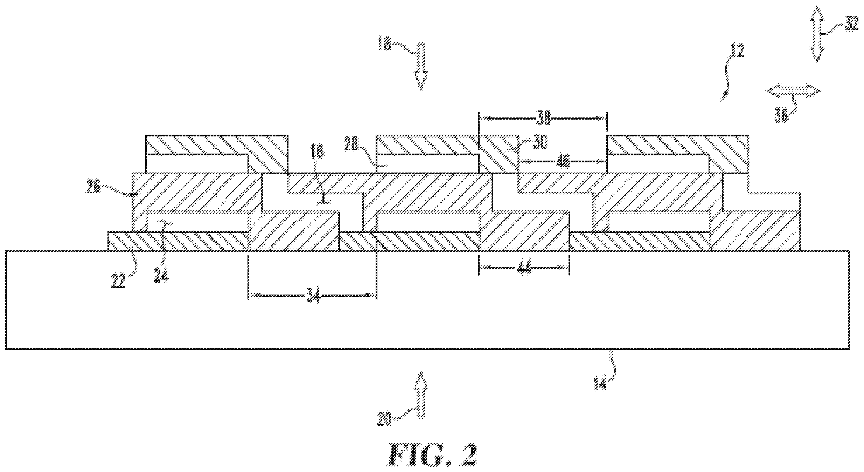

FIG. 2 is a schematic diagram illustrating an example cross section of fuel cell system 10 in accordance with an embodiment of the present disclosure. Fuel cell system 10 may be formed of a plurality of layers screen printed onto substrate 14. This may include a process whereby a woven mesh has openings through which the fuel cell layers are deposited onto substrate 14. The openings of the screen determine the length and width of the printed layers. Screen mesh, wire diameter, ink solids loading and ink rheology may determine the thickness of the printed layers. Fuel cell system 10 layers include an anode conductive layer 22, an anode layer 24, an electrolyte layer 26, a cathode layer 28 and a cathode conductive layer 30. In one form, electrolyte layer 26 may be a single layer or may be formed of any number of sub-layers. It will be understood that FIG. 2 is not necessarily to scale. For example, vertical dimensions are exaggerated for purposes of clarity of illustration.

In each electrochemical cell 12, anode conductive layer 22 conducts free electrons away from anode 24 and conducts the electrons to cathode conductive layer 30 via interconnect 16. Cathode conductive layer 30 conducts the electrons to cathode 28. Interconnect 16 is embedded in electrolyte layer 26, and is electrically coupled to anode conductive layer 22, and extends in direction 32 from anode conductive layer 22 through electrolyte layer 26, then in direction 36 from one electrochemical cell 12 to the next adjacent electrochemical cell 12, and then in direction 32 again toward cathode conductive layer 30, to which interconnect 16 is electrically coupled. In particular, at least a portion of interconnect 16 is embedded within an extended portion of electrolyte layer 26, wherein the extended portion of electrolyte layer 26 is a portion of electrolyte layer 26 that extends beyond anode 24 and cathode 28, e.g., in direction 32, and is not sandwiched between anode 24 and cathode 28.

Interconnects 16 for solid oxide fuel cells (SOFC) are preferably electrically conductive in order to transport electrons from one electrochemical cell to another; mechanically and chemically stable under both oxidizing and reducing environments during fuel cell operation; and nonporous, in order to prevent diffusion of the fuel and/or oxidant through the interconnect. If the interconnect is porous, fuel may diffuse to the oxidant side and burn, resulting in local hot spots that may result in a reduction of fuel cell life, e.g., due to degradation of materials and mechanical failure, as well as reduced efficiency of the fuel cell system. Similarly, the oxidant may diffuse to the fuel side, resulting in burning of the fuel. Severe interconnect leakage may significantly reduce the fuel utilization and performance of the fuel cell, or cause catastrophic failure of fuel cells or stacks.

For segmented-in-series cells, fuel cell components may be formed by depositing thin films on a porous ceramic substrate, e.g., substrate 14. In one form, the films are deposited via a screen printing process, including the interconnect. In other embodiments, other process may be employed to deposit or otherwise form the thin films onto the substrate. The thickness of interconnect layer may be 5 to 30 microns, but can also be much thicker, e.g., 100 microns.

Interconnect 16 may be formed of a precious metal including Ag, Pd, Au and/or Pt and/or alloys thereof, although other materials may be employed without departing from the scope of the present disclosure. For example, in other embodiments, it is alternatively contemplated that other materials may be employed, including precious metal alloys, such as Ag-Pd, Ag-Au, Ag-Pt, Au-Pd, Au-Pt, Pt-Pd, Ag-Au-Pd, Ag-Au-Pt, Ag-Au-Pd-Pt and/or binary, ternary, quaternary alloys in the Pt-Pd-Au-Ag family, inclusive of alloys having minor non-precious metal additions, cermets composed of a precious metal, precious metal alloy, and an inert ceramic phase, such as alumina, or ceramic phase with minimum ionic conductivity which will not create significant parasitics, such as YSZ (yttria stabilized zirconia, also known as yttria doped zirconia, yttria doping is 3-8 mol%, preferably 3-5 mol%), ScSZ (scandia stabilized zirconia, scandia doping is 4-10 mol%, preferably 4-6 mol%), doped ceria, and/or conductive ceramics, such as conductive perovskites with A or B-site substitutions or doping to achieve adequate phase stability and/or sufficient conductivity as an interconnect, e.g., including at least one of doped strontium titanate (such as LaₓSr₁₋ₓTiO_{3-δ}, x=0.1 to 0.3), LSCM (La₁₋ₓSrₓCr_{1-y}Mn_{y}O₃, x=0.1 to 0.3 and y=0.25 to 0.75), doped yttrium chromites (such as Y₁₋ₓCaₓCrO_{3-δ}, x=0.1-0.3) and/or other doped lanthanum chromites (such as La₁₋ₓCaₓCrO_{3-δ}, where x=0.15-0.3), and conductive ceramics, such as doped strontium titanate, doped yttrium chromites, LSCM (La₁₋ₓSrₓCr_{1-y}Mn_{y}O₃), and other doped lanthanum chromites. In one example, interconnect 16 may be formed of y(PdxPt1-x)-(1-y)YSZ. Where x is from 0 to 1 in weight ratio, preferably x is in the range of 0 to 0.5 for lower hydrogen flux. Y is from 0.35 to 0.80 in volume ratio, preferably y is in the range of 0.4 to 0.6.

Anode conductive layer 22 may be an electrode conductive layer formed of a nickel cermet, such as such as Ni-YSZ (e.g., where yttria doping in zirconia is 3-8 mol%,), Ni-ScSZ (e.g., where scandia doping is 4-10 mol%, preferably including a second doping for example 1 mol% ceria for phase stability for 10 mol% scandia-ZrO₂) and/or Ni-doped ceria (such as Gd or Sm doping), doped lanthanum chromite (such as Ca doping on A site and Zn doping on B site), doped strontium titanate (such as La doping on A site and Mn doping on B site), La₁₋ₓ SrₓMn_{y}Cr_{1-y}O₃ and/or Mn-based R-P phases of the general formula a (La₁₋ₓSrₓ)ₙ₊₁MnₙO₃ₙ₊₁ Alternatively, it is considered that other materials for anode conductive layer 22 may be employed such as cermets based in part or whole on precious metal. Precious metals in the cermet may include, for example, Pt, Pd, Au, Ag, and/or alloys thereof. The ceramic phase may include, for example, an inactive non-electrically conductive phase, including, for example, YSZ, ScSZ and/or one or more other inactive phases, e.g., having desired coefficients of thermal expansion (CTE) in order to control the CTE of the layer to match the CTE of the substrate and electrolyte. In some embodiments, the ceramic phase may include Al₂O₃ and/or a spinel such as NiAl₂O₄, MgAl₂O₄, MgCr₂O₄, NiCr₂O₄. In other embodiments, the ceramic phase may be electrically conductive, e.g., doped lanthanum chromite, doped strontium titanate and/or one or more forms of LaSrMnCrO and/or R-P phases of the general formula (La₁₋ₓSrₓ)ₙ₊₁MnₙO₃ₙ₊₁

Electrolyte layer 26 may be made from a ceramic material. In one form, a proton and/or oxygen ion conducting ceramic, may be employed. In one form, electrolyte layer 26 is formed of YSZ, such as 3YSZ and/or 8YSZ. In other embodiments, electrolyte layer 26 may be formed of ScSZ, such as 4ScSZ, 6ScSz and/or 10Sc1CeSZ in addition to or in place of YSZ. In other embodiments, other materials may be employed. For example, it is alternatively considered that electrolyte layer 26 may be made of doped ceria and/or doped lanthanum gallate. In any event, electrolyte layer 26 is substantially impervious to diffusion therethrough of the fluids used by fuel cell 10, e.g., synthesis gas or pure hydrogen as fuel, as well as, e.g., air or 02 as an oxidant, but allows diffusion of oxygen ions or protons.

Cathode layer 28 may be formed at least one of of LSM (La₁₋ₓSrₓMnO₃, where x=0.1 to 0.3), La₁₋ₓSrₓFeO₃,(such as where x=0.3), La₁₋ₓSrₓCo_{y}Fe_{1-y}O₃ (such as La_{0.6}Sr_{0.4}Co_{0.2} Fe_{0.8}O₃) and/or Pr₁₋ₓSrₓMnO₃ (such as Pr_{0.8}Sr_{0.2}MnO₃), although other materials may be employed without departing from the scope of the present invention. For example, it is alternatively considered that Ruddlesden-Popper nickelates and La₁₋ₓCaₓMnO₃ (such as La_{0.8}Ca_{0.2}MnO₃) materials may be employed.

Cathode conductive layer 30 may be an electrode conductive layer formed of a conductive ceramic, for example, at least one of LaNiₓFe₁₋ₓO₃ (such as, e.g., LaNi₀.₆Fe_{0.4}O₃), La₁₋ₓSrₓMnO₃ (such as La_{0.75}Sr_{0.25}MnO₃), and/or Pr₁₋ₓSrₓCoO₃, such as Pr_{0.8}Sr_{0.2}CoO₃. In other embodiments, cathode conductive layer 30 may be formed of other materials, e.g., a precious metal cermet, although other materials may be employed without departing from the scope of the present invention. The precious metals in the precious metal cermet may include, for example, Pt, Pd, Au, Ag and/or alloys thereof. The ceramic phase may include, for example, YSZ, ScSZ and Al₂O₃, or other non-conductive ceramic materials as desired to control thermal expansion.

In accordance with one or more examples of the present disclosure, anode 24 may include a Mn-based nickelate R-P phase composition. In particular, anode 24 includes a Ni phase constitution and a (La₁₋ₓSrₓ)ₙ₊₁MnₙO₃ₙ₊₁ compound having a Mn-based R-P phase constitution, wherein n is equal to or greater than zero. As noted above, based on MnOx thermodynamics and the size of the Mn cations, Mn-based R-P compounds may be favored to exist under the low oxygen partial pressure of the fuel side in a fuel cell. An example range of oxygen partial pressures throughout the operation of a solid oxide fuel cell are from 10⁻¹⁷ atm (stack outlet fuel composition) to 10⁻²⁰ atm representative of an anode protection gas mixture of H₂/N₂ containing some H₂O as a result of parasitic currents. Such an anode material may not be susceptible to the phase decomposition occurring for anodes formed from La-based nickelate R-P compounds, while still exhibiting desirable electronic and catalytic properties. Further, the presence of Ni phase constitution dispersed within the R-P phase constitution may act as a fuel oxidizing catalyst in combination with the catalytic activity of the R-P phase constitution.

The nickelate R-P composition of anode 24 may be formed using any suitable technique. In some examples, to form the Mn-based nickelate R-P composition of anode 24, the initial starting powder is a Mn and Ni mixed B-site perovskites, such as, e.g., (La₁₋ₓSrₓ)(Mn_{y}Ni_{1-y})O₃ may be utilized during air firing in the initial processing step of applying the anode precursor within the fuel cell structure. In some case, mixed B-site perovskites of the general formula (La₁₋ₓSrₓ)(Mn_{y}Ni_{1-y})O₃ may be used. Upon reduction in a fuel environment, these compounds change to a (La₁₋ₓSrₓ)ₙ₊₁MnₙO₃ₙ₊₁, where n is equal to or greater than one, which is a R-P compound plus residual Ni metal phase. As noted herein, the finely dispersed Ni phase may act as a fuel oxidizing catalyst in combination with the catalytic activity of the Mn-based R-P phase. Both the Mn-based R-P phase and Ni phases may contribute to the electronic conductivity needed for an active anode.

Various other A-site and B-site cations may be included in the initial perovskite starting powder, for instance Ca and Pr for the A-site and various B-site dopants such as Cu and Co that may be minimally retained in the R-P structure on reduction, but which may most preferentially be alloyed with the Ni alloy phase. Additional Ni content can be incorporated into the resulting anode by the addition of NiO with the (La₁₋ₓSrₓ)(Mn_{y}Ni_{1-y})O₃ powder within the processing of the anode into the fuel cell structure.

There is the potential to in-situ form a Mn plus Ni mixed B-site R-P compound during initial anode firing by mixing of (La₁₋ₓSrₓ)MnO₃ and R-P nickelate, (La₁₋ₓSrₓ)ₙ₊₁NiₙO₃ₙ₊₁, by selecting the correct molar ratios of A-site and B-site cations in the two powders and the correct molar ratio of the two powders. Upon reduction a Mn-based R-P phase constitution in addition to a dispersed Ni phase can result. For example:

2(La₁₋ₓSrₓ)(Mn)O₃ + (La₁₋ₓSrₓ)₂NiO₄ → (La₁₋ₓSrₓ)₄(Mn₂Ni)O₁₀ (air) Ni + 2(La₁₋ₓSrₓ)₂MnO₄ (reduced)

Where higher ordered (e.g., n=2,3) Mn-based R-P phases may be able to be formed in air because of the higher required B-site valence state in such compounds, and where these compounds could be mixed with NiO such that there could be an in-situ reaction during anode processing forming a mixed Ni and Mn B-site higher ordered R-P compound stable in air. With careful selection of chemistry and stoichiometry, upon reduction a Mn-based R-P phase constitution in addition to a dispersed Ni phase can result. Alternatively, the mixed Ni and Mn B-site higher ordered R-P compound could be the actual starting composition of the powder rather than formed in-situ. For example:

Ex. 1/3 NiO + 4/3 (La₁₋ₓSrₓ)₃Mn₂O₇ → (La₁₋ₓSrₓ)₄(Mn_{2.67}Ni_{0.33})O₁₀ (air) Ni + (La₁₋ₓSrₓ)₃Mn₂O₄ (reduced)

Other combinations of starting compounds are possible with the end objective of achieving a Mn-based R-P phase constitution in addition to a dispersed Ni phase upon anode reduction. Limitations on processing routes may exist based on the inability to achieve stable mixed B-site Mn-Ni R-P phases stable in air, but these examples are illustrative as potential routes to forming the desired anode phases.

The composition of anode 24 may be such that substantially all of anode 24 is formed of a (La₁₋ₓSrₓ)ₙ₊₁MnₙO₃ₙ₊₁ compound having a Mn-based R-P phase constitution in addition to Ni phase dispersed in the (La₁₋ₓSrₓ)ₙ₊₁MnₙO₃ₙ₊₁ compound. For example, anode 24 may include at least 80 wt% of the (La₁₋ₓSrₓ)ₙ₊₁MnₙO₃ₙ₊₁ compound having a Mn-based R-P phase constitution, such as, e.g., at least 82 wt% (La₁₋ₓSrₓ)ₙ₊₁MnₙO₃ₙ₊₁ compound having a Mn-based Ruddlesden-Popper (R-P) phase constitution. An example is (La_{0.75}Sr_{0.25})(Mn_{0.5}Ni_{0.5})O₃ which upon reduction leads to 83.1% (La_{0.75}Sr_{0.25})₂MnO₄ and 16.9% Ni.

The nickel phase may be present along with the (La₁₋ₓSrₓ)ₙ₊₁MnₙO₃ₙ₊₁ compound in an amount that allows for the Ni to act as a fuel oxidizing catalyst in combination with the catalytic activity of the R-P phase constitution. For example, anode 24 may include approximately 5 to approximately 18 percent by weight, As an example, (La_{0.75}Sr_{0.25})(Mn_{0.5}Ni_{0.5})O₃ which upon reduction leads to 83.1% (La_{0.75}Sr_{0.25})₂MnO₄ and 16.9% Ni at one end of the range (n=1 order) and (La₀.₇₅Sr_{0.25})(Mn_{0.75}Ni_{0.25})O₃ which upon reduction leads to 93.2% (La_{0.75}Sr_{0.25})₄Mn₃O₄ and 6.8% Ni (for n=3 order), and at higher order R-P compounds the Ni content would be less. The prior examples are indicative of Ni contents that could be achieve from dissolution from the perovskite phase upon reduction, but additional Ni content may be achieved by including NiO content along with the (La₁₋ₓSrₓ)(Mn_{y}Ni_{1-y})O₃ during the initial processing of the anode.

Although it may be desirable to achieve phase pure B-site mixed perovskite or R-P phases during the initial air-sintering of the anode and likewise upon reduction to achieve only the desired R-P phase plus Ni constitution, it is realized that some secondary phases from incomplete reactions during powder synthesis or in-situ formulation may result and that some minor phases other than the R-P and Ni phases may occur upon reduction because of incomplete phase decomposition, however, the presence of minor amounts of these phases may still provide for favorable performance and durability of the solid oxide fuel cell.

In cases in which the anode composition is formed via the reduction of Mn and Ni mixed B-site perovskites, the amount of Ni phase dispersed in the Mn-based R-P may depend on the composition of the Mn and Ni mixed B-site perovskites. In particular, the ratio of the Mn to Ni content on the B-site of the perovskite composition will dictate the nature of the resulting Mn-based R-P compound. As an example, the below table illustrate theoretical composition resulting from the reduction of Mn and Ni mixed B-site perovskites.

| Mn fraction (y) on B-site | 0.5 | 0.67 | 0.75 |
|---|---|---|---|
| Theoretical resulting Mn R-P compound on reduction | (La₁₋ₓSrₓ)₂MnO₃ | (La₁₋ₓSrₓ)₃Mn₂O₇ | (La₁₋ₓSrₓ)₄Mn₃O₁₀ |
| Order of R-P phase | 1 | 2 | 3 |

The perovskite composition does not necessarily need to be at 0.5. 0.67 and 0.75. Values for the Mn fraction on the B-site different from 0.5. 0.67 and 0.75 would be expected to yield combinations of different ordered R-P compositions,. The relative levels of free metallic Ni in the reduced anode would be greatest for perovskite Mn volume fractions at about 0.5. As there could be some remaining solubility of Ni within the ceramic phase upon reduction, the resulting R-P phase may have some mixed Mn and Ni on the B-site, there could be some remaining perovskite phase present and the final metallic Ni phase would thus be less than theoretical phases along with any residual perovskite phases.

In some examples, the composition of anode 24 may include one or more additives, elements, or compounds other than Ni phase dispersed in the (La₁₋ₓSrₓ)ₙ₊₁MnₙO₃ₙ₊₁ compound having a Mn-based R-P phase constitution. In one example, the Ni plus (La₁₋ₓSrₓ)ₙ₊₁MnₙO₃ₙ₊₁ Mn-based R-P phases may be composited with an ionic phase such as 8YSZ, or yttria stabilized zirconias (YSZ) of 3-8 mole percent yttria, scandia stabilized zirconia (ScSZ) of 4-10 mole percent scandia and may include minor additional stabilizers such as 1 mole percent Ce or 0.5-1 mole percent alumina, and may include doped ceria where the dopant is one or more of Gd, Y, Sm and/or Pr. In such an embodiment, the starting mixture for the anode consists of the (La₁₋ₓSrₓ)(Mn_{y}Ni_{1-y})O₃, the ionic phase and could include additional NiO content as desired to impact polarization resistance and bulk electronic conductivity of the reduced anode. In one example, anode 24 may consist essentially of Ni and the the (La₁₋ₓSrₓ)ₙ₊₁MnₙO₃ₙ₊₁ compound having a Mn-based R-P phase constitution, where the additionally material in present only in an amount that does not alter one or more properties of the material in a manner that does not allow anode 24 to function as described herein.

As noted above, anode conductive layer 22 may be an electrode conductive layer formed of a nickel cermet. Since in some examples, predominately ceramic-based anodes, including those described herein, may provide for a relatively low polarization ASR, however the electronic conductivity in some instances may be insufficient. Accordingly, anode conductive layer 22 may be a Ni-based cermet composition to account for the low electronic conductivity of anode 24.

Any suitable technique may be employed to form electrochemical cell 12 of FIGS. 1 and 2. In the example of FIG. 2, anode conductive layer 22 may be printed directly onto substrate 14, as is a portion of electrolyte 26. Anode layer 24 may be printed onto anode conductive layer 22. Portions of electrolyte layer 26 may be printed onto anode layer 24, and portions of electrolyte layer 26 are printed onto anode conductive layer 22 and onto substrate 14. Cathode layer 28 is printed on top of electrolyte layer 26. Portions of cathode conductive layer 30 are printed onto cathode layer 28 and onto electrolyte layer 26. Cathode layer 28 is spaced apart from anode layer 24 in a direction 32 by the local thickness of electrolyte layer 26.

Anode layer 24 includes anode gaps 34, which extend in a direction 36. Cathode layer 28 includes cathode gaps 38, which also extend in direction 36. In the example of FIG. 2, direction 36 is substantially perpendicular to direction 32, although the present disclosure is not so limited. Gaps 34 separate anode layer 24 into a plurality of individual anodes 40, one for each electrochemical cell 12. Gaps 38 separate cathode layer 28 into a corresponding plurality of cathodes 42. Each anode 40 and the corresponding cathode 42 that is spaced apart in direction 32 therefrom, in conjunction with the portion of electrolyte layer 26 disposed therebetween, form an electrochemical cell 12.

Similarly, anode conductive layer 22 and cathode conductive layer 30 have respective gaps 44 and 46 separating anode conductive layer 22 and cathode conductive layer 30 into a plurality of respective anode conductor films 48 and cathode conductor films 50. The terms, "anode conductive layer" and "anode conductor film" may be used interchangeably, in as much as the latter is formed from one or more layers of the former; and the terms, "cathode conductive layer" and "cathode conductor film" may be used interchangeably, in as much as the latter is formed from one or more layers of the former.

In some examples, anode conductive layer 22 has a thickness, i.e., as measured in direction 32, of approximately 5-15 microns, although other values may be employed without departing from the scope of the present disclosure. For example, it is considered that in other embodiments, the anode conductive layer may have a thickness in the range of approximately 5-50 microns. In yet other embodiments, different thicknesses may be used, e.g., depending upon the particular material and application.

Similarly, anode layer 24 may have a thickness, i.e., as measured in direction 32, of approximately 5-20 microns, although other values may be employed without departing from the scope of the present invention. For example, it is considered that in other embodiments, the anode layer may have a thickness in the range of approximately 5-40 microns. In yet other embodiments, different thicknesses may be used, e.g., depending upon the particular anode material and application.

Electrolyte layer 26 may have a thickness of approximately 5-15 microns with individual sub-layer thicknesses of approximately 5 microns minimum, although other thickness values may be employed without departing from the scope of the present invention. For example, it is considered that in other embodiments, the electrolyte layer may have a thickness in the range of approximately 5-40 microns. In yet other embodiments, different thicknesses may be used, e.g., depending upon the particular materials and application.

Cathode layer 28 has a thickness, i.e., as measured in direction 32, of approximately 10-20 microns, although other values may be employed without departing from the scope of the present invention. For example, it is considered that in other embodiments, the cathode layer may have a thickness in the range of approximately 10-50 microns. In yet other embodiments, different thicknesses may be used, e.g., depending upon the particular cathode material and application.

Cathode conductive layer 30 has a thickness, i.e., as measured in direction 32, of approximately 5-100 microns, although other values may be employed without departing from the scope of the present invention. For example, it is considered that in other embodiments, the cathode conductive layer may have a thickness less than or greater than the range of approximately 5-100 microns. In yet other embodiments, different thicknesses may be used, e.g., depending upon the particular cathode conductive layer material and application.

Although not shown in FIG. 2, in some examples, fuel cell system 10 may include one or more chemical barrier layers between interconnect 16 and adjacent components to reduce or prevent diffusion between the interconnect and adjacent components, e.g., an anode and/or an anode conductor film and/or cathode and/or cathode conductor film, may adversely affect the performance of certain fuel cell systems. In various embodiments, such a chemical barrier layer may be configured to prevent or reduce material migration or diffusion at the interface between the interconnect and an anode, and and/or between the interconnect and an anode conductor film, and/or between the interconnect and a cathode, and/or between the interconnect and a cathode conductor film which may improve the long term durability of the interconnect. For example, without a chemical barrier, material migration (diffusion) may take place at the interface between an interconnect formed of a precious metal cermet, and an anode conductor film and/or anode formed of a Ni-based cermet. The material migration may take place in both directions, e.g., Ni migrating from the anode conductive layer/conductor film and/or anode into the interconnect, and precious metal migrating from the interconnect into the conductive layer/conductor film and/or anode. The material migration may result in increased porosity at or near the interface between the interconnect and the anode conductor film and/or anode, and may result in the enrichment of one or more non or low-electronic conducting phases at the interface, yielding a higher area specific resistance (ASR), and hence resulting in reduced fuel cell performance. Material migration between the interconnect and the cathode and/or between the interconnect and the cathode conductor film may also or alternatively result in deleterious effects on fuel cell performance. Such a chemical barrier layer may be formed of one or both of two classes of materials; cermet and/or conductive ceramic.

### EXAMPLES

Various experiments were carried out to evaluate one or more aspects of example anode compositions in accordance with the disclosure. However, examples of the disclosure are not limited to the experimental anode compositions.

Three different Mn+Ni B-site perovskite powders where obtained from TransTech, Inc. (Adamstown, MD). In particular, the first example powder obtained was (La_{0.875}Sr _{0.125})(Mn_{0.5}Ni _{0.5})O₃, which was designed to form (La_{0.875}Sr _{0.125})₂MnO₄ n=1 ordered R-P phase constitution plus Ni metal phase constitution on reduction. After reduction, the composition was analyzed via X-ray diffraction. The X-ray diffraction showed some R-P phase, perovskite phase, metallic Ni phase and some free La₂O₃. Based on the La₂O₃ content, it was determined that the example composition was not favorable for the desired phase generation.

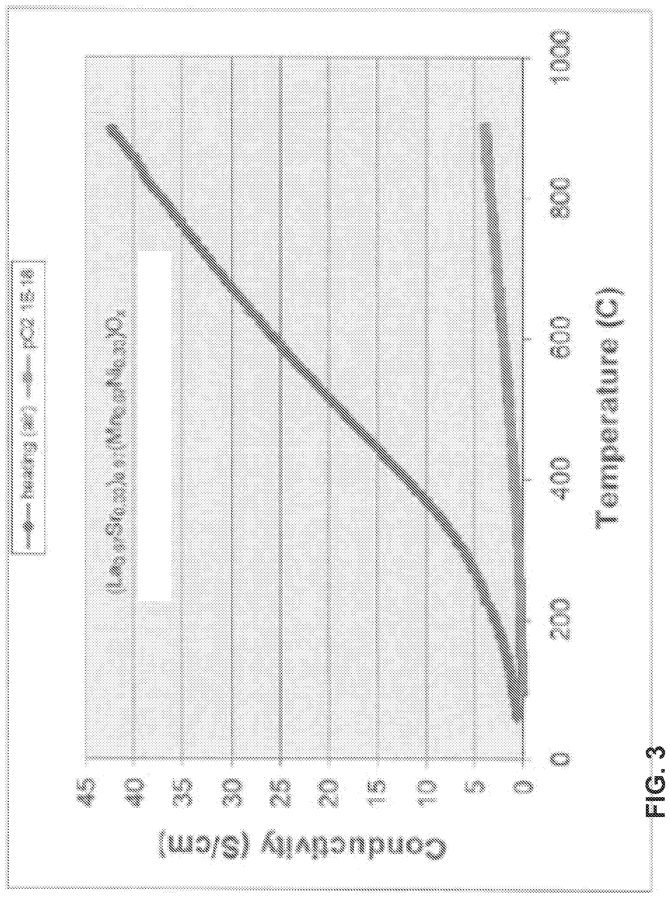

The second example powder obtained for evaluation was (La_{0.67}Sr _{0.33})_{0.97}(Mn_{0.67}Ni _{0.33})O₃, which was designed to form (La_{0.67}Sr _{0.33})_{2.91}Mn₂O₇ n=2 ordered R-P phase constitution (with slight A-site deficiency) plus Ni metal phase constitution on reduction. After reduction, the composition was analyzed via X-ray diffraction. The X-ray diffraction showed the R-P phase and Ni metal phase. FIG. 3 is a plot illustrating electrical conductivity measurements taken for (La_{0.67}Sr _{0.33})_{0.97}(Mn_{0.67}Ni _{0.33})O₃ in both air and a low oxygen partial pressure (1x10⁻¹⁸ atm) . As illustrated, the electrical conductivity measurements showed conductivity in low pO₂ fuel of 3-4 S/cm at typical fuel cell operating temperatures.

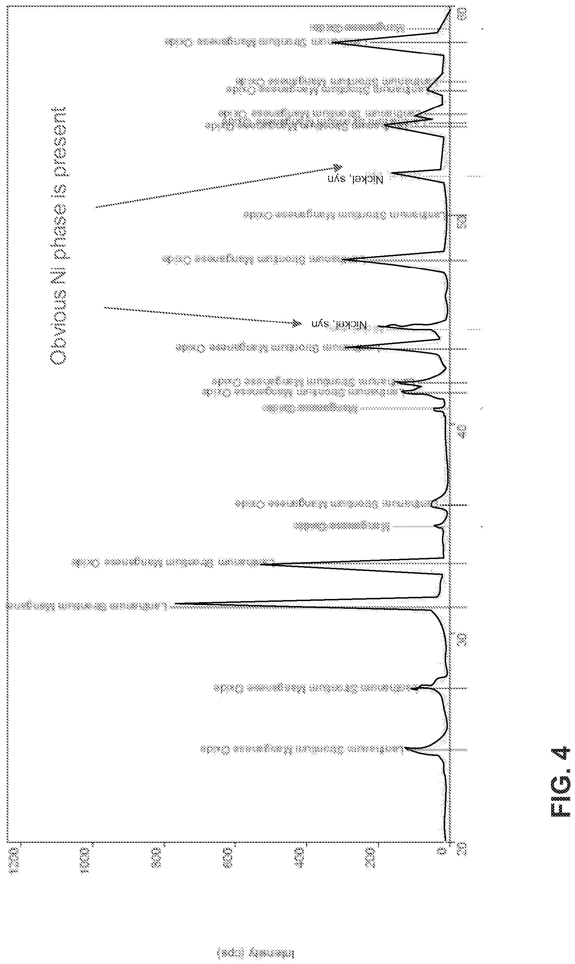

The third example powder obtained for evaluation was (La_{0.45}Sr _{0.55})_{0.97}(Mn_{0.5}Ni _{0.5})O₃, which was designed to form (La_{0.45}Sr _{0.55})_{1.94}MnO₄ n=1 ordered R-P phase constitution (with slight A-site deficiency) plus Ni metal phase constitution on reduction. After reduction, the composition was analyzed via X-ray diffraction. The X-ray diffraction showed the R-P phase, likely some minor residual perovskite phase, and Ni metal phase. FIG. 4 is a plot illustrating the results of the X-ray diffraction analysis of the reduced third example composition. As shown, the results indicate that Ni metal phase is present in the reduced composition (other lines are for R-P phase and there is very minor MnO present).

Three individual electrochemical fuel cells were fabricated using the second and third example powder compositions to form anodes for the cells. For these cells the cathode was an LSM+YSZ composite, the cathode current collector was 100% LSM of the same composition of the LSM in the cathode, the anode current collector was a NiPd alloy cermet with YSZ and MgAl₂O₄ ceramic phases.. In particular, the active anodes for each of the three cells were as follows:
(La_{0.45}Sr _{0.55})_{0.97}(Mn_{0.5}Ni _{0.5})O₃ (referred to as B2:LSMN50).
(La_{0.67}Sr_{0.33})_{0.97}(Mn_{0.67}Ni _{0.33})O₃ plus 10Sc1CeSZ ionic phase (referred to as B1:LSMN67+10Sc)
(La_{0.45}Sr _{0.55})_{0.97}(Mn_{0.5}Ni _{0.5})O₃ plus 10Sc1CeSZ ionic phase (referred to as A2:LSMN50+10Sc).

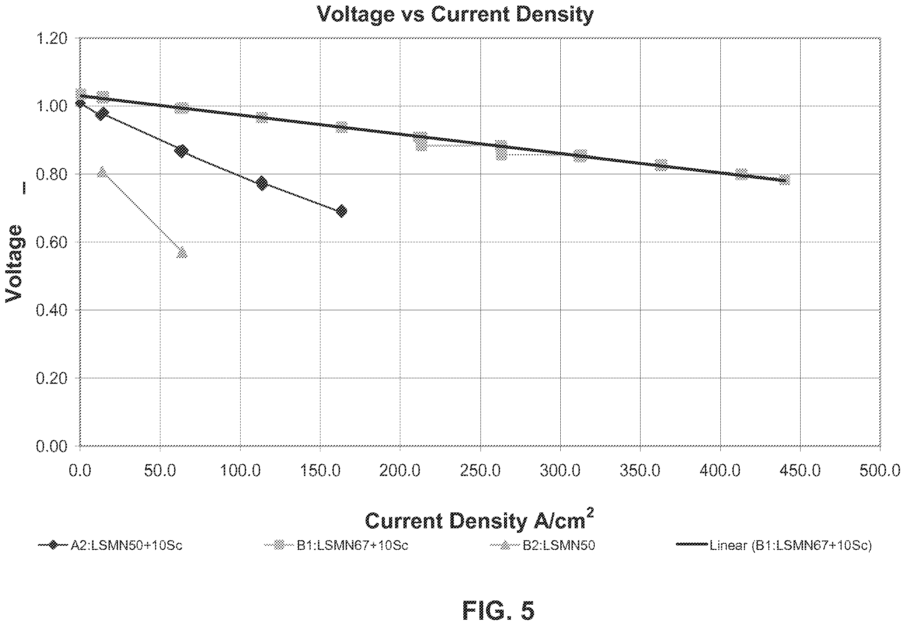

FIG. 5 is a plot illustrating measured voltage versus current density for each of the three cells fabricated for evaluation. As shown, best performing cell was included B1:LSMN67+10Sc as the active anode with ASR in the 0.6 ohm-cm² range. Even though the ASR value is higher than traditional Ni-YSZ based anodes, the performance expects to be further improved through optimizing composition and microstructure. These result showed improved performance when compositing the Mn-based R-P and Ni phases with an ionic phase

Various embodiments of the invention have been described. These and other embodiments are within the scope of the following claims.

## Claims

1. A fuel cell comprising:
a cathode;
an electrolyte; and
a reduced anode separated from the cathode by the electrolyte, wherein the reduced anode includes a Ni metal phase constitution dispersed in a (La₁₋ₓSrₓ)ₙ₊₁MnₙO₃ₙ₊₁ compound having a Mn-based Ruddlesden-Popper (R-P) phase constitution, wherein n is equal to or greater than one, and wherein the anode, cathode, and electrolyte are configured to form an electrochemical cell.

2. The fuel cell of claim 1, wherein the Ni metal phase constitution dispersed in the (La₁₋ₓSrₓ)ₙ₊₁MnₙO₃ₙ₊₁ compound having a Mn-based R-P phase constitution, of n greater than or equal to 1, is formed via a reduction of a Mn and Ni mixed B-site compound having a perovskite structure or Ruddlesden-Popper compound that is present following an initial anode processing step.

3. The fuel cell of claim 2, wherein the Mn and Ni mixed B-site compound comprises a (La₁₋ₓSrₓ)(Mn₁₋ₓNiₓ)O₃ compound.

4. The fuel cell of claim 2, wherein the Mn and Ni mixed B-site compound comprises a (La₁₋ₓSrₓ)ₙ₊₁(Ni₁₋ₓMnₓ)ₙO₃ₙ₊₁ Ruddlesden-Popper compound.

5. The fuel cell of claim 1, wherein the reduced anode includes between approximately 82 and approximately 95 wt% of the (La₁₋ₓSrₓ)ₙ₊₁MnₙO₃ₙ₊₁ compound having the Mn-based R-P phase constitution and between 5-18 wt% of the Ni metal phase constitution.

6. The fuel cell of claim 1, wherein the reduced anode further includes an ionic phase including yttria and/or scandia stabilized zirconia or rare-earth oxide stabilized ceria dispersed in the Ni metal phase and (La₁₋ₓSrₓ)ₙ₊₁MnₙO₃ₙ₊₁ Mn-based R-P phase, wherein the ionic phase is present in an amount of 35 weight percent to 65 weight percent.

7. The fuel cell of claim 1, wherein the anode consists essentially of the Ni metal phase constitution dispersed in the (La₁₋ₓSrₓ)ₙ₊₁MnₙO₃ₙ₊₁ compound having the Mn-based R-P phase constitution.

8. A method for forming a fuel cell, the fuel cell including:
a cathode;
an electrolyte; and
a reduced anode separated from the cathode by the electrolyte;
the method comprising:
forming an initial anode in an air environment, wherein the initial anode comprises a Mn and Ni mixed B-site compound having a perovskite structure or a Ruddlesden-Popper compound when initially formed; and
reducing the Mn and Ni mixed B-site compound having a perovskite structure or a Ruddlesden-Popper compound in a fuel environment to form a reduced anode;
wherein the composition of the initial anode is such that the reduced anode includes a Ni metal phase constitution dispersed in a (La₁₋ₓSrₓ)ₙ₊₁MnₙO₃ₙ₊₁ compound having a Mn-based Ruddlesden-Popper (R-P) phase constitution, wherein n is equal to or greater than one, and wherein the anode, cathode, and electrolyte are configured to form an electrochemical cell.

9. The method of claim 8, wherein the Mn and Ni mixed B-site compound comprises a (La₁₋ₓSrₓ)(Mn₁₋ₓNiₓ)O₃ compound.

10. The method of claim 8, wherein the Mn and Ni mixed B-site compound comprises a (La₁₋ₓSrₓ)ₙ₊₁(Ni₁₋ₓMnₓ)ₙO₃ₙ₊₁ Ruddlesden-Popper compound.

11. The method of claim 8, wherein the reduced anode includes between 82 and 95 wt% of the (La₁₋ₓSrₓ)ₙ₊₁MnₙO₃ₙ₊₁ compound having the Mn-based R-P phase constitution and between 5-18 wt% of the Ni metal phase.

12. The method of claim 8, further comprising adding an ionic phase including yttria and/or scandia stabilized zirconia or rare-earth oxide stabilized ceria to the Ni metal phase and (La₁₋ₓSrₓ)ₙ₊₁MnₙO₃ₙ₊₁ Mn-based R-P phase, wherein the reduced anode includes the ionic phase in an amount of 35 weight percent to 65 weight percent.

13. The method of claim 8, wherein the reduced anode consists essentially of the Ni metal phase constitution and the (La₁₋ₓSrₓ)ₙ₊₁MnₙO₃ₙ₊₁ compound having the Mn-based R-P phase constitution.

14. The method of claim 8, further comprising forming an anode conductive layer adjacent the anode, wherein the anode conductive layer comprises a cermet, where the metal phase in the cermet comprises Ni.

## Patentansprüche

1. Brennstoffzelle, die Folgendes umfasst:
eine Kathode;
einen Elektrolyten; und
eine reduzierte Anode, die durch den Elektrolyten von der Kathode getrennt ist, wobei die reduzierte Anode eine Ni-Metallphasenzusammensetzung, die in einer (La₁₋ₓSrₓ)ₙ₊₁MnₙO₃ₙ₊₁-Verbindung dispergiert ist, die eine Mn-basierte Ruddlesden-Popper(R-P)-Phasenzusammensetzung aufweist, enthält, wobei n gleich oder größer eins ist, und wobei die Anode, die Kathode und der Elektrolyt konfiguriert sind, um eine elektrochemische Zelle zu bilden.

2. Brennstoffzelle nach Anspruch 1, wobei die Ni-Metallphasenzusammensetzung, die in der (La₁₋ₓSrₓ)ₙ₊₁MnₙO₃ₙ₊₁-Verbindung dispergiert ist, die eine Mn-basierte R-P-Phasenzusammensetzung von n größer oder gleich 1 aufweist, durch eine Reduktion von einer Mn- und Ni-gemischten B-Stellen-Verbindung gebildet wird, die eine Perowskitstruktur oder eine Ruddlesden-Popper-Verbindung, die nach einem anfänglichen Anodenverarbeitungsschritt vorhanden ist, aufweist.

3. Brennstoffzelle nach Anspruch 2, wobei die Mn- und Ni-gemischte B-Stellen-Verbindung eine (La₁₋ₓSrₓ)(Mn₁₋ₓNiₓ)O₃-Verbindung umfasst.

4. Brennstoffzelle nach Anspruch 2, wobei die Mn- und Ni-gemischte B-Stellen-Verbindung eine (La₁₋ₓSrₓ)ₙ₊₁(Ni₁₋ₓMnₓ)ₙO₃ₙ₊₁-Ruddlesden-Popper-Verbindung umfasst.

5. Brennstoffzelle nach Anspruch 1, wobei die reduzierte Anode zwischen ungefähr 82 und ungefähr 95 Gew.-% von der (La₁₋ₓSrₓ)ₙ₊₁MnₙO₃ₙ₊₁-Verbindung, die eine Mn-basierte R-P-Phasenzusammensetzung aufweist, und zwischen 5-18 Gew.-% der Ni-Metallphasenzusammensetzung enthält.

6. Brennstoffzelle nach Anspruch 1, wobei die reduzierte Anode des Weiteren eine ionische Phase enthält, die yttrium- und/oder scandiumstabilisiertes Zirconiumoxid oder oxidstabilisiertes Ceroxid der seltenen Erden enthält, das in der Ni-Metallphase und (La₁₋ₓSrₓ)ₙ₊₁MnₙO₃ₙ₊₁ Mn-basierten R-P-Phase dispergiert ist, wobei die ionische Phase in einer Menge von 35 Gewichtsprozent bis 65 Gewichtsprozent vorhanden ist.

7. Brennstoffzelle nach Anspruch 1, wobei die Anode hauptsächlich aus der Ni-Metallphasenzusammensetzung besteht, die in der (La₁₋ₓSrₓ)ₙ₊₁MnₙO₃ₙ₊₁-Verbindung dispergiert ist, die eine Mn-basierte R-P-Phasenzusammensetzung aufweist.

8. Verfahren zur Bildung einer Brennstoffzelle, wobei die Brennstoffzelle Folgendes umfasst:
eine Kathode;
einen Elektrolyten; und
eine reduzierte Anode, die durch den Elektrolyten von der Kathode getrennt ist; wobei das Verfahren Folgendes umfasst:
Bilden einer anfänglichen Anode in einer Luftumgebung, wobei die anfängliche Anode eine Mn- und Ni-gemischte B-Stellen-Verbindung umfasst, die bei der anfänglichen Bildung eine Perowskitstruktur oder eine Ruddlesden-Popper-Verbindung aufweist; und
Reduzieren der Mn- und Ni-gemischten B-Stellen-Verbindung, die eine Perowskitstruktur oder eine Ruddlesden-Popper-Verbindung in einer brennstoffhaltigen Umgebung aufweist, um eine reduzierte Anode zu bilden;
wobei die Zusammensetzung der anfänglichen Anode so ist, dass die reduzierte Anode eine Ni-Metallphasenzusammensetzung, die in einer (La₁₋ₓSrₓ)ₙ₊₁MnₙO₃ₙ₊₁-Verbindung dispergiert ist, die eine Mn-basierte Ruddlesden-Popper(R-P)-Phasenzusammensetzung aufweist, enthält, wobei n gleich oder größer eins ist, und wobei die Anode, die Kathode und der Elektrolyt konfiguriert sind, um eine elektrochemische Zelle zu bilden.

9. Verfahren nach Anspruch 8, wobei die Mn- und Ni-gemischte B-Stellen-Verbindung eine (La₁₋ₓSrₓ)(Mn₁₋ₓNiₓ)O₃-Verbindung umfasst.

10. Verfahren nach Anspruch 8, wobei die Mn- und Ni-gemischte B-Stellen-Verbindung eine (La₁₋ₓSrₓ)ₙ₊₁(Ni₁₋ₓMnₓ)ₙO₃ₙ₊₁-Ruddlesden-Popper-Verbindung umfasst.

11. Verfahren nach Anspruch 8, wobei die reduzierte Anode zwischen 82 und 95 Gew.-% von der (La₁₋ₓSrₓ)ₙ₊₁MnₙO₃ₙ₊₁-Verbindung, die die Mn-basierte R-P-Phasenzusammensetzung aufweist, und zwischen 5-18 Gew.-% der Ni-Metallphase enthält.

12. Verfahren nach Anspruch 8, ferner umfassend das Zugeben einer ionischen Phase, die yttrium- und/oder scandiumstabilisiertes Zirconiumoxid oder oxidstabilisiertes Ceroxid der seltenen Erden zu der Ni-Metallphase und der (La₁₋ₓSrₓ)ₙ₊₁MₙO₃ₙ₊₁ Mn-basierten R-P-Phase enthält, wobei die reduzierte Anode die ionische Phase in einer Menge von 35 Gewichtsprozent bis 65 Gewichtsprozent enthält.

13. Verfahren nach Anspruch 8, wobei die reduzierte Anode hauptsächlich aus der Ni-Metallphasenzusammensetzung und der (La₁₋ₓSrₓ)ₙ₊₁MnₙO₃ₙ₊₁-Verbindung besteht, die eine Mn-basierte R-P-Phasenzusammensetzung aufweist.

14. Verfahren nach Anspruch 8, ferner umfassend eine Anoden-Leitschicht, die an die Anode angrenzt, wobei die Anoden-Leitschicht ein Cermet umfasst, wobei die Metallphase im Cermet Ni umfasst.

## Revendications

1. Pile à combustible comprenant :
une cathode ;
un électrolyte ; et
une anode réduite séparée de la cathode par l'électrolyte, ladite anode réduite comprenant une constitution de phase métallique de Ni dispersée dans un composé de (La₁₋ₓSrₓ)ₙ₊₁MnₙO₃ₙ₊₁ possédant une constitution de phase de Ruddlesden-Popper (R-P) à base de Mn, n étant supérieur ou égal à un, et ladite anode, ladite cathode et ledit électrolyte étant conçus pour former une cellule électrochimique.

2. Pile à combustible selon la revendication 1, ladite constitution de phase métallique de Ni dispersée dans le composé de (La₁₋ₓSrₓ)ₙ₊₁MnₙO₃ₙ₊possédant une constitution de phase de R-P à base de Mn, avec n supérieur ou égal à 1, étant formée par l'intermédiaire d'une réduction d'un composé de site B mélangé de Mn et de Ni possédant un composé de structure pérovskite ou de Ruddlesden-Popper qui est présent suite à une étape de traitement d'anode initiale.

3. Pile à combustible selon la revendication 2, ledit composé de site B mélangé de Mn et de Ni comprenant un composé de (La₁₋ₓSrₓ)(Mn₁₋ₓNiₓ)O₃.

4. Pile à combustible selon la revendication 2, ledit composé de site B mélangé de Mn et de Ni comprenant un composé de Ruddlesden-Popper de (La₁₋ₓSrₓ)ₙ₊₁(Ni₁₋ₓMnₓ)ₙO₃ₙ₊₁.

5. Pile à combustible selon la revendication 1, ladite anode réduite comprenant entre environ 82 et environ 95 % en poids de composé de (La₁₋ₓSrₓ)ₙ₊₁MnₙO₃ₙ₊₁ possédant la constitution de phase de R-P à base de Mn et entre 5 et 18 % en poids de la constitution de phase métallique de Ni.

6. Pile à combustible selon la revendication 1, ladite anode réduite comprenant en outre une phase ionique comprenant de la zircone stabilisée au scandia et/ou à l'yttria ou du ceria stabilisé à un oxyde de terre rare dispersée dans la phase métallique de Ni et la phase de R-P à base de Mn de (La₁₋ₓSrₓ)ₙ₊₁MnₙO₃ₙ₊₁, ladite phase ionique étant présente en une quantité allant de 35 % en poids à 65 % en poids.

7. Pile à combustible selon la revendication 1, ladite anode étant composée essentiellement de la phase métallique de Ni dispersée dans le composé de (La₁₋ₓSrₓ)ₙ₊₁MnₙO₃ₙ₊₁ possédant la constitution de phase de R-P à base de Mn.

8. Procédé permettant la formation d'une pile à combustible, ladite pile à combustible comprenant :
une cathode ;
un électrolyte ; et
une anode réduite séparée de la cathode par l'électrolyte ;
ledit procédé comprenant :
la formation d'une anode initiale dans un environnement d'air, ladite anode initiale comprenant un composé de site B mélangé de Mn et de Ni possédant une structure pérovskite ou un composé de Ruddlesden-Popper lorsqu'elle est formée initialement ; et
la réduction du composé de site B mélangé de Mn et de Ni possédant une structure pérovskite ou un composé de Ruddlesden-Popper dans un environnement de combustible afin de former une anode réduite ;
ladite composition de l'anode initiale étant telle que l'anode réduite comprend une constitution de phase métallique de Ni dispersée dans un composé de (La₁₋ₓSrₓ)ₙ₊₁MnₙO₃ₙ₊₁ possédant une constitution de phase de Ruddlesden-Popper (R-P) à base de Mn, n étant supérieur ou égal à un, et ladite anode, ladite cathode et ledit électrolyte étant conçus pour former une cellule électrochimique.

9. Procédé selon la revendication 8, ledit composé de site B mélangé de Mn et de Ni comprenant un composé de (La₁₋ₓSrₓ)(Mn₁₋ₓNiₓ)O₃.

10. Procédé selon la revendication 8, ledit composé de site B mélangé de Mn et de Ni comprenant un composé de Ruddlesden-Popper de (La₁₋ₓSrₓ)ₙ₊₁(Ni₁₋ₓMnₓ)ₙO₃ₙ₊₁.

11. Procédé selon la revendication 8, ladite anode réduite comprenant entre 82 et 95 % en poids du composé de (La₁₋ₓSrₓ)ₙ₊₁MnₙO₃ₙ₊₁ possédant la constitution de phase de R-P à base de Mn et entre 5 et 18 % en poids de la phase métallique de Ni.

12. Procédé selon la revendication 8, comprenant en outre l'ajout d'une phase ionique comprenant de la zircone stabilisée au scandia et/ou à l'yttria ou du ceria stabilisé à un oxyde de terre rare à la phase métallique de Ni et à la phase de R-P à base de Mn de (La₁₋ₓSrₓ)ₙ₊₁MnₙO₃ₙ₊₁, ladite anode réduite comprenant la phase ionique en une quantité allant de 35% en poids à 65 % en poids.

13. Procédé selon la revendication 8, ladite anode réduite étant composée essentiellement de la constitution de phase métallique de Ni et ledit composé de (La₁₋ₓSrₓ)ₙ₊₁MnₙO₃ₙ₊₁ possédant la constitution de phase de R-P à base de Mn.

14. Procédé selon la revendication 8, comprenant en outre la formation d'une couche conductrice d'anode adjacente à l'anode, ladite couche conductrice d'anode comprenant un cermet, ladite phase métallique dans le cermet comprenant du Ni.
